# EUROPEAN PATENT SPECIFICATION

(11) **EP 3 144 853 B1**
(45) Date of publication and mention of the grant of the patent: **18.03.2020**
(21) Application number: 15185771.1
(22) Date of filing: 18.09.2015
(51) Int. Cl.: G06K 9/62, G06K 9/00

(54) **DETECTION OF WATER DROPLETS ON A VEHICLE CAMERA LENS**
DETEKTION VON WASSERTROPFEN AN EINEM FAHRZEUGKAMERAOBJEKTIV
DÉTECTION DE GOUTTELETTES D'EAU SUR UNE LENTILLE DE CAMÉRA DE VÉHICULE

(43) Date of publication of application: 22.03.2017
(73) Proprietor: Continental Automotive GmbH, 30165 Hannover (DE)
(72) Inventor: Lawson, Clifford, Finchingfield, CM7 4JU (GB); Gao, Lingjun, Uckfield, TN22 5BZ (GB); Gagnon, Peter, Brighton, BN15PS (GB); Yadav, Dev, Lewes, BN7 2SA (GB)
(74) Representative: Bobbert, Christiana

(56) References cited:
- EP-A1- 2 698 981
- WO-A1-2013/034166
- MARTIN ROSER ET AL: "Video-based raindrop detection for improved image registration", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 September 2009 (2009-09-27), pages 570-577, XP031664663, ISBN: 978-1-4244-4442-7
- KURIHARA H ET AL: "Rainy weather recognition from in-vehicle camera images for driver assistance", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 205-210, XP010833968, DOI: 10.1109/IVS.2005.1505103 ISBN: 978-0-7803-8961-8
- FRIEDER MUGELE ET AL: "TOPICAL REVIEW; Electrowetting: from basics to applications; Electrowetting: from basics to applications", JOURNAL OF PHYSICS: CONDENSED MATTER, INSTITUTE OF PHYSICS PUBLISHING, BRISTOL, GB, vol. 17, no. 28, 20 July 2005 (2005-07-20) , pages R705-R774, XP020089268, ISSN: 0953-8984, DOI: 10.1088/0953-8984/17/28/R01

## Description

The present application relates to vehicle camera systems.

The scientific publication "Video-based raindrop detection for improved image registration" by Martin Roser and Andreas Geiger relates to the topic of video-based raindrop detection for improved image registration, wherein artificial raindrop patterns are generated in a region of interest (ROIs) and raindrops are verified by intensity-based correlation, and wherein prior knowledge of the vehicle dynamics and on the camera setup in combination with homography constraints is used.

It is an object of the present specification to provide an improved method and device for the detection of droplets on a camera lens. In a broader sense, the method is also used for detecting droplets on a transparent surface in front of the camera lens, such as a windscreen or on a transparent lens cover.

The droplet detection procedure according to the present specification makes use of the lens property of droplets. When there are droplets of rain on the lens of a camera each droplet itself acts as a further lens and contains a miniature view of the entire scene that is being seen by the main camera image.

Due to the smallness of the droplets the focal plane of the droplets is very close to the lens surface of the camera lens. Behind the focal plane of the drops the light rays diverge again and the droplets act as wide angle lenses. As a consequence, the droplets appear as tiny wide angle lenses at the focal plane of the camera lens, which is far behind the focal plane of the drops and produce a minimized image of the scene.

Furthermore, the droplets have a large curvature and act as fish eye lenses which can cover a large part of the scene or even provide a 180° view that covers the complete scene which is observed through the camera lens.

The image that is produced by the droplet is in general rotated. Usually the image rotation is about 180° degrees, but for some shapes of droplets the rotation angle can be different from 180°. The rotation can be found out by identifying a demarcation line between a bright and a dark area, such as the horizon, and observing its rotation.

In general, the droplet image is distorted. If the drops are not spherical but thicker at one end, the wide angle effect is stronger at the thicker end of the drop and the distortion is stronger. The imaging plane where the drop image appears sharp is located behind the imaging plane in which the scene appears sharp. If the objects are sufficiently far away, the imaging planes are close to the respective focal planes.

If the depth of focus of the camera lens does not cover the image plane of the droplet and the image plane of the camera lens, the effect can be compensated according to the present specification by focusing part of the camera light to a second sensor, which is placed at a distance at which the droplet images appear sharp for a typical droplet size and using the memory representation of this image for the detection of water drops.

The droplets, which form "little windows" often stick to the surface and do not move from frame to frame. According to the present specification, this property can be used to improve the identification of the droplets by using multiple image frames. If it is detected that an object resembles the scene and the boundaries are not changing or are changing only slightly, the detection of a droplet can be confirmed.

Likewise, the droplet detection can be confirmed or improved by detecting whether the content of an object, such as the relative illumination of image portions changes in a similar way as the complete observed scene. Consecutive image frames can be considered as forming a three dimensional cube. According to an extended embodiment, miniature versions of the N frame cube are detected in the N frame cube.

Furthermore, a droplet detection according to the present specification can also be initialized by detecting boundaries of objects and confirming the detection by matching the content of the detected object with the scene.

According to one embodiment, the method is carried out on an image which is not already corrected for lens distortions. The image detection can be carried out on simple mono cameras that provide grey scale images. If colour images are available, the colour information can be used to improve the detection quality. If image frames from a stereo camera are available, the difference between the stereo images may be used in addition to speed up the detection of droplets.

According to the present specification, rain drops are detected by identified image areas which appear to be a small scaled view of the entire image.

According to one embodiment, the entire image view is scaled to various small sizes within the known range of likely raindrop sizes. Then, these scaled down areas are matched against areas of the main image by pattern matching. If small, entire views of the complete image are found on top of image patches it can be concluded that the image patches correspond to raindrops in that part of the image.

According to one embodiment, the detected raindrop areas are reported or forwarded to other algorithms as areas that should be ignored or treated with caution. If the proportion of the rain drops is large, it may even be decided that the entire image cannot be trusted for other object detection algorithms because it is known to be severely obscured.

The current specification discloses a computer implemented method for detecting droplets on a lens of a vehicle camera. Image data with image frames is received from a vehicle camera. A synthetic droplet image is generated by reducing a first image frame of the image data to a predetermined size of a droplet, which is within a pre-determined range of droplet sizes.

The reduction in size can in general involve some sort of averaging or interpolation procedure to map the pixels of the image frame to the size of the synthetic droplet image. Herein, "the image frame" does not have to include every pixel of the image frame. For example it also refers to a major portion of the image frame.

Thereby a reduced size image is obtained, and the reduced size image is rotated by a pre-determined rotation angle, which is typically 180 degrees. In particular, a 180 degree rotation may be obtained without copying computer memory portions just by changing an indexing of the lines of the memory representation of the image frame or of the synthetic droplet image. For example, a computer program may be operative to access the computer memory in a reverse order. The rotation may also be obtaining by copying memory content, however.

A similarity is determined or computed between the synthetic droplet image and a detection portion of a second image frame at a pre-determined position of the detection portion. Herein, the detection portion has essentially the same shape and size as the synthetic droplet image. In particular, the first and second image frame may refer to the same image frame or to copies of the same image frame. In an alternative embodiment, the first and second image frames are obtained from separate image sensors but cover essentially the same region of the scene.

The comparison is repeated for different positions of the detection portion. For example, the comparison may be repeated for different positions of the detection portion until at least 80% of the frame area is covered with a pre-determined resolution of positions.

The pre-determined resolution may be chosen as 1 pixel, which means that close-by detection regions are offset by 1 pixel with respect to each other, or it may be lower. A droplet, or a droplet candidate, is detected if the similarity exceeds a predetermined threshold.

According to a further application, a ratio of the area occupied by the droplets and the area of the image frame, and an alert message is sent if the ratio exceeds a predetermined value. The locations of the detected droplets are forwarded to other image processing applications.

The comparison between the synthetic droplet and the image portion is performed in parallel for multiple image portions. For example, the comparison can be carried out by multiple threads, which a scheduler program or a scheduler hardware component can assign to different processors or processor kernels depending on the availability of hardware resources.

According to a further embodiment, which provides further options to carry out the comparisons in parallel, the second image frame is stored in a first memory location and in a second memory location.

A second synthetic droplet image is generated by reducing the first image frame of the image data to a second predetermined size of a droplet, thereby obtaining a reduced size image and by rotating the reduced size image by a pre-determined rotation angle, which is typically 180 degrees.

A similarity is determined between the second synthetic droplet image and a detection portion of the second image frame at the second memory location at pre-determined positions of the detection portion. Similarly, the detection portion has the same shape and size as the second synthetic droplet image. A droplet, or a droplet candidate, is detected if the similarity exceeds a predetermined threshold.

According to a further embodiment the first image frame is separated into regions with differing brightness for example regions below and above a horizon. The comparison between a synthetic droplet image and a detection portion comprises separating the detection portion into corresponding regions and comparing the regions of the first image frame with the regions of the detection portion. Thereby, the droplet detection may be improved or it may be accelerated.

According to a specific embodiment, the position and shape of the synthetic droplet is adjusted according to a predetermined lens distortion function and according to a position of the detection portion in the second image frame. This embodiment takes into account that droplet may appear differently in different locations, in particular next to the border of the image frame.

According to a further embodiment, the first image frame is obtained from a first sensor and the second image frame is obtained from a second sensor, wherein an optical distance from a camera lens to the first sensor is different from an optical distance from the camera lens to the second sensor. This embodiment can take into account that the droplets change the effective focal distance of the lens, and the image of the droplet appears focused at a different optical distance than the image plane of the main image.

In particular, the sizes of the droplets can be chosen according to a pre-determined geometric progression or according to a pre-determined statistical distribution of droplets.

In order to speed up the detection procedure, previously determined positions of droplets can be used as starting positions for comparing the synthetic droplets with underlying portions of the image frame. For example, the determined droplet positions of the last 10 frames may be used to predict the positions of the droplet in a present frame.

The specification also discloses a computer program for executing the steps of the aforementioned method and a computer readable storage medium with the computer program.

In a further aspect, the current specification discloses an image processing device for a vehicle camera which is operative to execute the aforementioned detection method.

In particular, the present specification discloses an image processing device which comprises an input connection for receiving image data from the vehicle camera, the image data comprising image frames and a computation unit that is connected to the input connection.

The computation unit is operative to generate a synthetic droplet image by reducing a first image frame of the image data to a predetermined size of a droplet, thereby obtaining a reduced size image and by rotating the reduced size image by a pre-determined rotation angle. Furthermore, the computation unit is operative to determine a similarity between the synthetic droplet image and a detection portion of a second image frame at a pre-determined position of the detection portion, wherein the detection portion has the same shape and size as the synthetic droplet image, and to detect a droplet if the similarity exceeds a predetermined threshold.

In a further embodiment, the computation unit comprises a multi-kernel graphics processor. Furthermore the computation unit provides scheduling means to assign comparisons of a synthetic droplet image with multiple image portions of an image frame to different processor kernels of the multi-kernel graphics processor.

Furthermore, the present specification discloses a kit with the image processing device wherein the vehicle camera is connectable to the image processing device. For example, the image processing device can be supplied as part of the vehicle camera or separately for attachment to the car electronics.

In a further embodiment, the vehicle camera is adapted to focus the camera image to a first sensor and to a second sensor.

The first image frame is obtained from the first sensor and the second image frame is obtained from the second sensor.

Furthermore, the present specification discloses a vehicle, such as a passenger car, a utility car, a bus etc., with the kit installed in the vehicle.

The vehicle camera is mounted to the vehicle such that the vehicle camera points to a scene outside the vehicle and is connected to the image processing device. The image processing device is provided as an electronic component of the vehicle or of the vehicle camera.

The subject matter of the present specification is now explained in further detail with respect to the following Figures in which
- Fig. 1: shows a vehicle with a camera system,
- Fig. 2: shows a camera image with droplets recorded by the camera system of Fig. 1,
- Fig. 3: shows a droplet recognition procedure for detecting droplets, such as the droplets of Fig. 2,
- Fig. 4: shows a further droplet recognition procedure that involves multiple comparisons in parallel,
- Fig. 5: shows a further droplet recognition procedure that involves multiple comparisons in parallel, and
- Fig. 6: shows a droplet recognition procedure that involves copying of memory areas and performing the comparison in parallel for the multiple memory areas.

In the following description, details are provided to describe embodiments of the application. It shall be apparent to one skilled in the art, however, that the embodiments may be practiced without such details.

Some parts of the embodiments have similar parts. The similar parts may have the same names or similar part numbers. The description of one similar part also applies by reference to another similar parts, where appropriate, thereby reducing repetition of text without limiting the disclosure.

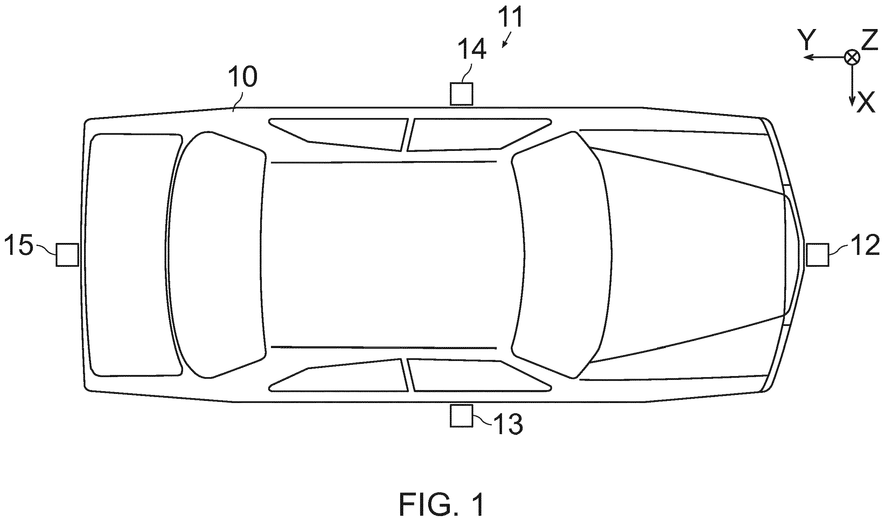

Fig. 1 shows a car with a camera system. Figure 1 shows a car 10 with a surround view system 11. The surround view system 11 comprises a front view camera 12, a right side view camera 13, a left side view camera 14 and a rear view camera 15. The cameras 11 - 14 are connected to a CPU of a controller, which is not shown in Fig. 1. The controller is connected to further sensors and units, such as a velocity sensor, a steering angle sensor, a GPS unit, and acceleration and orientation sensors.

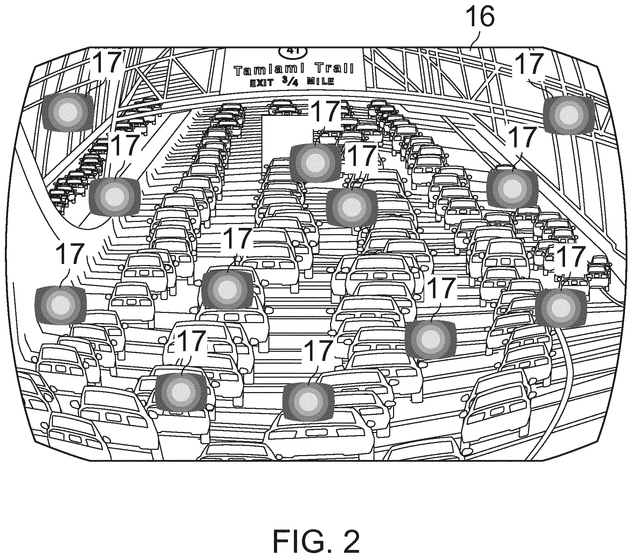

Fig. 2 shows a camera image 16 with droplets 17. For simplicity, the droplets 17 are shown with uniform shapes and sizes. In a real picture the shape, the orientation and also the sizes of the droplets vary.

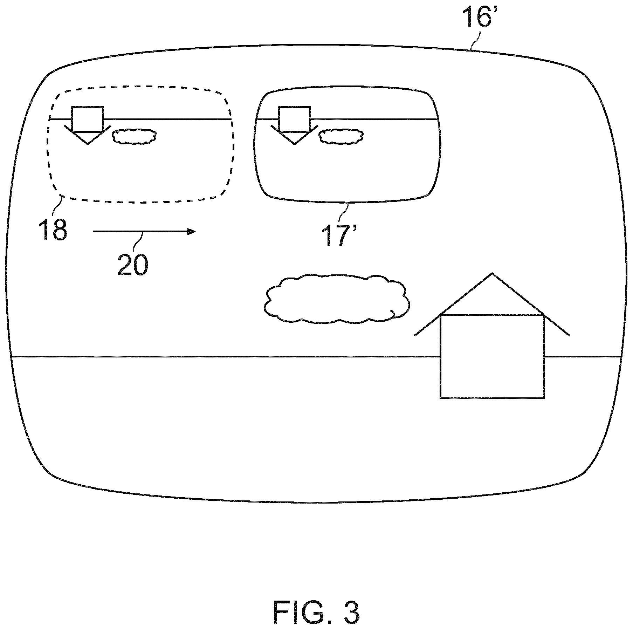

Fig. 3 shows a droplet recognition procedure, in which a synthetic droplet image 18 is compared to corresponding underlying image portions at multiple locations. By way of example, Fig. 3 shows a direction 20 in which the synthetic droplet image is moved across the image frame. The image frame may be scanned in various ways, for example line by line, column by column, according to a star pattern, on circular trajectories and so forth.

The synthetic droplet image 18 is obtained by reducing the complete image frame 16' to a pre-determined droplet size and by rotating the reduced size image by 180 degrees. The synthetic droplet image 18 will in general also contain reduced size versions of the droplets while the images produced by the droplets do not contain these artefacts.

As long as the droplets only cover a minor portion of the screen, this difference does not affect the droplet recognition. The synthetic droplet images are only compared with respect to an approximate similarity. In general, the droplet images also show artefacts which are due to the irregular shape of the droplets.

In a simple realization, a similarity of the synthetic droplet image 18 with an underlying image portion is measured with a least squares estimate that compares the pixel brightness. According to other realizations, the comparison also makes use of detected image features of the synthetic droplet 18, such as divisions into dark and bright image areas or regions of high contrast, lines, feature points, vanishing points etc.

Often, the camera image contains features that are aligned along street boundaries, which essentially have the same vanishing point. This feature can be used for comparison provided that the distortion of the droplets is not such that it prevents the determination of a vanishing point.

On the other hand it can be advantageous to compare only simple features of the synthetic droplet image 18 that do not require extensive image processing. For example, according to one realization, the pixels of the synthetic droplet image are averaged to effective pixels with a bigger size than the original pixels and the effective pixels are compared with effective pixels of the underlying image portion. According to another realization, only a subset of the pixels is compared, such as every second pixel.

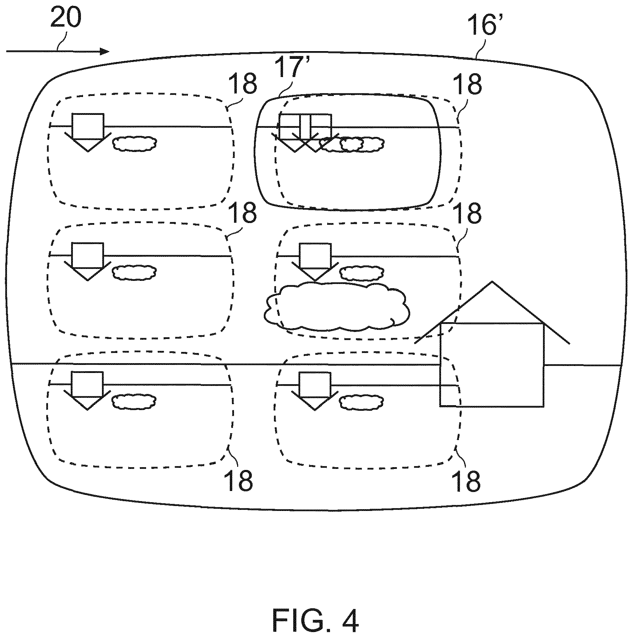

Fig. 4 shows a further droplet recognition procedure in which a synthetic droplet image 18 is compared to multiple different image portions of an image frame 16' in parallel. According to one exemplary embodiment, the comparisons are assigned to different computational threads. A scheduler assigns the threads to different processor kernels of a graphics card according to the availability of computational resources.

For easier visualization, the synthetic droplet images 18, 19 in the Figs. 4 - 6 are shown bigger than their typical size would be. For example, a droplet size could be 1/8 or 1/10 of the horizontal or the vertical extension in the respective direction or smaller. Among other factors, this property depends on the size of the lens.

The droplet images 18 are assigned to rectangular portions of the image 16' and are compared with corresponding underlying image portions of the rectangular portion of the image 16'.

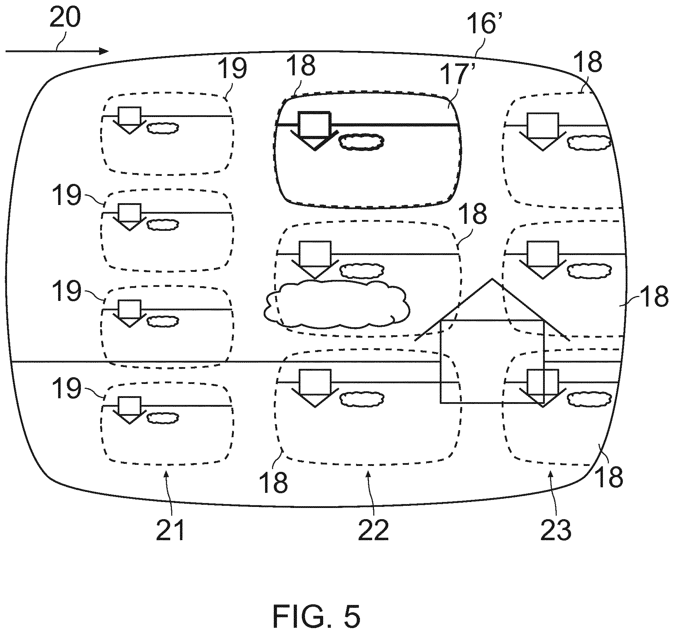

Fig. 5 shows a further droplet recognition procedure in which the image frame 16' is compared with differently sized synthetic droplet images, a synthetic droplet image 18 of a first size and a synthetic droplet image 19 of a second size. The area sizes of the synthetic droplet images 18, 19 are chosen within a pre-determined range of droplet sizes.

In the position of the synthetic droplets 18 of Fig. 5, the synthetic droplet images 18 are moved to a position in which one of the synthetic droplet images 18 has a high similarity to an underlying portion 17' of the image frame 16. In particular, the darker foreground almost coincides with the image of the foreground provided by the droplet on the camera lens and the brighter sky region almost coincides with the image of the sky provided by the droplet on the camera lens.

In one realization according to Fig. 5, columns 21, 22, 23 of synthetic droplet images 18 are moved across the image frame 16' in a horizontal direction. In other words, the columns of synthetic droplet images are compared to underlying image portions of the image frame 16' at consecutive locations, and the consecutive locations are moved from left to right. The columns contain droplet images 18' of different sizes and/or of different vertical alignments.

The direction of movement 20 from left to right is only provided by way of example. For example, the columns 21, 22, 23 could be moved from right to left or the synthetic droplet images could be grouped into rows which are moved from bottom to top or from top to bottom.

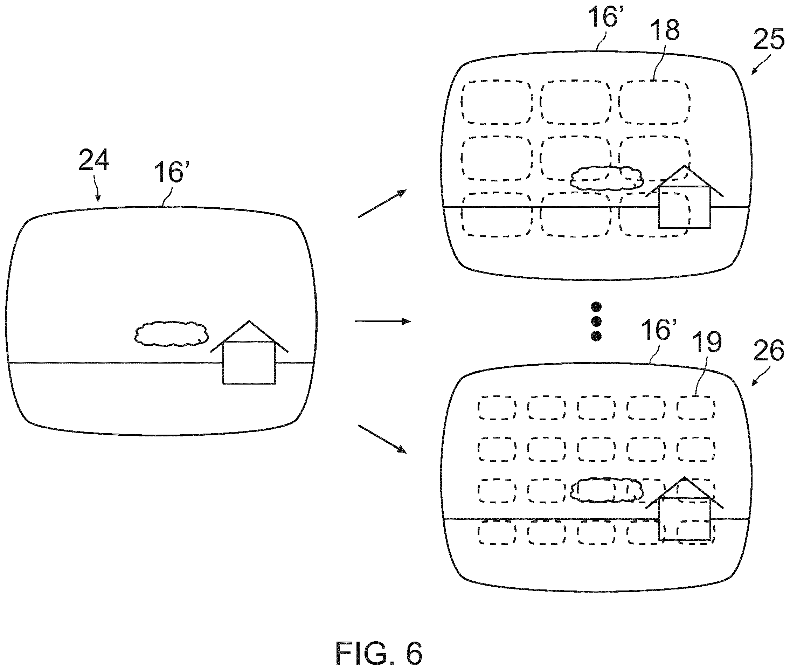

Fig. 6 shows a further droplet recognition procedure. According to the procedure of Fig. 6, the image frame 16', which is stored in a memory area 24 of a computer memory, is copied to a first memory area 25 and to a second memory area 26. The dots in Fig. 6 indicate that the memory area 24 can be copied to more than two memory areas.

Synthetic droplet images 18 of a first size are compared with corresponding underlying image portions of the image frame 16' of the first memory area 24. Similarly, synthetic droplet images 19 of a second size are compared with corresponding underlying image portions of the image frame 16' of the second memory area 26.

In an alternative embodiment, the first memory area 25 is provided by the original memory area 24. A copying of computer memory areas according to the embodiment of Fig. 6 can facilitate a parallel processing. For example, the comparisons that involve the copied memory areas 25, 26 can be carried out in parallel by different processor kernels or they can be assigned to different threads.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

## Claims

1. A method for detecting droplets on a lens of a vehicle camera, comprising
- receiving image data from a vehicle camera, the image data comprising image frames,
- generating a synthetic droplet image by reducing a first image frame of the image data to a predetermined size of a droplet, thereby obtaining a reduced size image and by rotating the reduced size image by a predetermined rotation angle,
- comparing the synthetic droplet image and a detection portion of a second image frame, the detection portion being a portion of an image frame at a predetermined position, and determining a similarity between the synthetic droplet image and the detection portion, wherein the detection portion has the same shape and size as the synthetic droplet image, and wherein the comparison is repeated for different positions of the detection portion,
- detecting a droplet if the similarity exceeds a predetermined threshold, wherein the similarity is measured with a least squares estimate that compares the pixel brightness of the synthetic droplet image and the underlying detection portion, wherein the pixels of the synthetic droplet image are averaged to effective pixels with a bigger size than the original pixels, and the effective pixels of the synthetic droplet image are compared with effective pixels of the underlying image portion.

2. The method of claim 1, comprising
- performing the comparison between the synthetic droplet and the detection portion in parallel for multiple detection portions.

3. The method of claim 1 or claim 2, comprising
- storing the second image frame in a first memory location and a second memory location,
- generating a second synthetic droplet image by reducing the first image frame of the image data to a second predetermined size of a droplet, thereby obtaining a reduced size image and by rotating the reduced size image by a pre-determined rotation angle,
- determining a similarity between the second synthetic droplet image and a detection portion of the second image frame at the second memory location at pre-determined positions of the detection portion, wherein the detection portion has the same shape and size as the second synthetic droplet image,
- detecting a droplet if the similarity exceeds a predetermined threshold.

4. The method of one of the preceding claims, comprising
- separating the first image frame into regions with differing brightness,
wherein the comparison between a synthetic droplet image and a detection portion comprises separating the detection portion into corresponding regions and comparing the regions of the synthetic droplet image, corresponding to the regions of the first image frame, with the regions of the detection portion.

5. The method according to one of the preceding claims, comprising
- adjusting the shape of the synthetic droplet according to a pre-determined lens distortion function and according to a position of the detection portion in the second image frame.

6. The method according to one of the preceding claims, comprising
- obtaining the first image frame from a first sensor and the obtaining the second image frame from a second sensor, wherein an distance from a camera lens to the first sensor is different from an distance from the camera lens to the second sensor.

7. The method according to one of the preceding claims, wherein the sizes of the synthetic droplet images are chosen according to a pre-determined geometric progression or according to a pre-determined statistical distribution of droplets.

8. The method according to one of the preceding claims, wherein previously determined positions of droplets are used as starting positions for comparing the synthetic droplets with underlying portions of the image frame.

9. A computer program for executing the steps of a method according to one of the claims 1 to 7.

10. A computer readable storage medium with the computer program according to claim 9.

11. An image processing device for a vehicle camera, the image processing device comprising
- an input connection for receiving image data from the vehicle camera, the image data comprising image frames,
- a computation unit, the computation unit being connected to the input connection, and the computation unit being operative
to generate a synthetic droplet image by reducing a first image frame of the image data to a predetermined size of a droplet, thereby obtaining a reduced size image and by rotating the reduced size image by a predetermined rotation angle,
to compare the synthetic droplet image and a detection portion of a second image frame, the detection portion being a portion of an image frame at a predetermined position, and to determine a similarity between the synthetic droplet image and the detection portion, wherein the detection portion has the same shape and size as the synthetic droplet image, and wherein the comparison is repeated for different positions of the detection portion, and
to detect a droplet if the similarity exceeds a predetermined threshold, wherein the similarity is measured with a least squares estimate that compares the pixel brightness of the synthetic droplet image and the underlying detection portion, wherein the pixels of the synthetic droplet image are averaged to effective pixels with a bigger size than the original pixel, and the effective pixels of the synthetic droplet image are compared with effective pixels of the underlying image portion.

12. The image processing device according to claim 11, wherein the computation unit comprising a multi-kernel graphics processor, and wherein the computation unit provides scheduling means to assign comparisons of a synthetic droplet image with multiple image portions of an image frame to different processor kernels of the multi-kernel graphics processor.

13. A kit, the kit comprising the image processing device according to claim 11 or claim 12, and a vehicle camera, the vehicle camera being connectable to the image processing device.

14. The kit of claim 13, wherein the vehicle camera is adapted to focus the camera image to a first sensor and to a second sensor, and wherein the first image frame is obtained from the first sensor and the second image frame is obtained from the second sensor.

15. Vehicle with the kit according to claim 13 or claim 14, wherein the vehicle camera is mounted to the vehicle such that the vehicle camera points to a scene outside the vehicle, the vehicle camera is connected to the image processing device, and wherein the image processing device is provided as an electronic component of the vehicle or of the vehicle camera.

## Patentansprüche

1. Verfahren zur Detektion von Tropfen an einem Objektiv einer Fahrzeugkamera, umfassend
- Empfangen von Bilddaten aus einer Fahrzeugkamera, wobei die Bilddaten Bild-Frames umfassen,
- Erzeugen eines synthetischen Tropfenbildes durch Reduzieren eines ersten Bild-Frames der Bilddaten auf eine vorgegebene Größe eines Tropfens, wodurch ein in seiner Größe reduziertes Bild gewonnen wird, und durch Drehen des in seiner Größe reduzierten Bildes um einen vorgegebenen Drehwinkel,
- Vergleichen des synthetischen Tropfenbildes und eines Detektionsabschnittes eines zweiten Bild-Frames, wobei der Detektionsabschnitt ein Abschnitt eines Bild-Frames an einer vorgegebenen Position ist, und Bestimmen einer Ähnlichkeit zwischen dem synthetischen Tropfenbild und dem Detektionsabschnitt, wobei der Detektionsabschnitt die gleiche Form und Größe wie das synthetische Tropfenbild aufweist, und wobei der Vergleich für unterschiedliche Positionen des Detektionsabschnittes wiederholt wird,
- Detektieren eines Tropfens, falls die Ähnlichkeit einen vorgegebenen Schwellenwert überschreitet, wobei die Ähnlichkeit mit einer Schätzung der kleinsten Quadrate gemessen wird, die die Pixelhelligkeit des synthetischen Tropfenbildes und des zugrunde liegenden Detektionsabschnittes vergleicht, wobei die Pixel des synthetischen Tropfenbildes zu effektiven Pixeln mit einer größeren Größe als die ursprünglichen Pixel gemittelt werden und die effektiven Pixel des synthetischen Tropfenbildes mit effektiven Pixeln des zugrunde liegenden Bildabschnittes verglichen werden.

2. Verfahren nach Anspruch 1, umfassend
- Durchführen des Vergleiches zwischen dem synthetischen Tropfen und dem Detektionsabschnitt parallel für mehrere Detektionsabschnitte.

3. Verfahren nach Anspruch 1 oder Anspruch 2, umfassend
- Speichern des zweiten Bild-Frames an einem ersten Speicherplatz und einem zweiten Speicherplatz,
- Erzeugen eines zweiten synthetischen Tropfenbildes durch Reduzieren des ersten Bild-Frames der Bilddaten auf eine zweite vorgegebene Größe eines Tropfens, wodurch ein in seiner Größe reduziertes Bild gewonnen wird, und durch Drehen des in seiner Größe reduzierten Bildes um einen vorgegebenen Drehwinkel,
- Bestimmen einer Ähnlichkeit zwischen dem zweiten synthetischen Tropfenbild und einem Detektionsabschnitt des zweiten Bild-Frames an dem zweiten Speicherplatz an vorgegebenen Positionen des Detektionsabschnittes, wobei der Detektionsabschnitt die gleiche Form und Größe wie das zweite synthetische Tropfenbild aufweist,
- Detektieren eines Tropfens, falls die Ähnlichkeit einen vorgegebenen Schwellenwert überschreitet.

4. Verfahren nach einem der vorangehenden Ansprüche, umfassend
- Trennen des ersten Bild-Frames in Bereiche mit unterschiedlicher Helligkeit,
wobei der Vergleich zwischen einem synthetischen Tropfenbild und einem Detektionsabschnitt das Trennen des Detektionsabschnittes in entsprechende Bereiche und das Vergleichen der Bereiche des synthetischen Tropfenbildes, die den Bereichen des ersten Bild-Frames entsprechen, mit den Bereichen des Detektionsabschnittes umfasst.

5. Verfahren nach einem der vorangehenden Ansprüche, umfassend
- Anpassen der Form des synthetischen Tropfens gemäß einer vorgegebenen Objektivverzeichnungsfunktion und gemäß einer Position des Detektionsabschnittes in dem zweiten Bild-Frame.

6. Verfahren nach einem der vorangehenden Ansprüche, umfassend
- Gewinnen des ersten Bild-Frames aus einem ersten Sensor und Gewinnen des zweiten Bild-Frames aus einem zweiten Sensor, wobei sich eine Entfernung von einem Kameraobjektiv zu dem ersten Sensor von einer Entfernung von dem Kameraobjektiv zu dem zweiten Sensor unterscheidet.

7. Verfahren nach einem der vorangehenden Ansprüche, wobei die Größen der synthetischen Tropfenbilder gemäß einer vorgegebenen geometrischen Progression oder gemäß einer vorgegebenen statistischen Verteilung von Tropfen gewählt werden.

8. Verfahren nach einem der vorangehenden Ansprüche, wobei zuvor bestimmte Positionen von Tropfen als Ausgangspositionen für den Vergleich der synthetischen Tropfen mit zugrunde liegenden Abschnitten des Bild-Frames verwendet werden.

9. Computerprogramm zur Ausführung der Schritte eines Verfahrens nach einem der Ansprüche 1 bis 7.

10. Maschinell lesbarer Datenträger mit dem Computerprogramm nach Anspruch 9.

11. Bildverarbeitungsvorrichtung für eine Fahrzeugkamera, wobei die Bildverarbeitungsvorrichtung umfasst
- einen Eingangsanschluss zum Empfangen von Bilddaten aus der Fahrzeugkamera, wobei die Bilddaten Bild-Frames umfassen,
- eine Recheneinheit, wobei die Recheneinheit an den Eingangsanschluss angeschlossen ist und die Recheneinheit so wirkt, dass sie
ein synthetisches Tropfenbild erzeugt durch Reduzieren eines ersten Bild-Frames der Bilddaten auf eine vorgegebene Größe eines Tropfens, wodurch ein in seiner Größe reduziertes Bild gewonnen wird, und durch Drehen des in seiner Größe reduzierten Bildes um einen vorgegebenen Drehwinkel,
das synthetische Tropfenbild und einen Detektionsabschnitt eines zweiten Bild-Frames vergleicht, wobei der Detektionsabschnitt ein Abschnitt eines Bild-Frames an einer vorgegebenen Position ist, und eine Ähnlichkeit zwischen dem synthetischen Tropfenbild und dem Detektionsabschnitt bestimmt, wobei der Detektionsabschnitt die gleiche Form und Größe wie das synthetische Tropfenbild aufweist, und wobei der Vergleich für unterschiedliche Positionen des Detektionsabschnittes wiederholt wird, und
einen Tropfen detektiert, falls die Ähnlichkeit einen vorgegebenen Schwellenwert überschreitet, wobei die Ähnlichkeit mit einer Schätzung der kleinsten Quadrate gemessen wird, die die Pixelhelligkeit des synthetischen Tropfenbildes und des zugrunde liegenden Detektionsabschnittes vergleicht, wobei die Pixel des synthetischen Tropfenbildes zu effektiven Pixeln mit einer größeren Größe als das ursprüngliche Pixel gemittelt werden und die effektiven Pixel des synthetischen Tropfenbildes mit effektiven Pixeln des zugrunde liegenden Bildabschnittes verglichen werden.

12. Bildverarbeitungsvorrichtung nach Anspruch 11, wobei die Recheneinheit einen Grafikprozessor mit mehreren Kernel umfasst und wobei die Recheneinheit Planungsmittel bereitstellt, um Vergleiche eines synthetischen Tropfenbildes mit mehreren Bildabschnitten eines Bild-Frames unterschiedlichen Prozessor-Kernel des Grafikprozessors mit mehreren Kernel zuzuweisen.

13. Set, wobei der Set die Bildverarbeitungsvorrichtung nach Anspruch 11 oder Anspruch 12 und eine Fahrzeugkamera umfasst, wobei die Fahrzeugkamera an die Bildverarbeitungsvorrichtung anschließbar ist.

14. Set nach Anspruch 13, wobei die Fahrzeugkamera so angepasst ist, dass sie das Kamerabild auf einen ersten Sensor und auf einen zweiten Sensor fokussiert, und wobei der erste Bild-Frame aus dem ersten Sensor gewonnen wird und der zweite Bild-Frame aus dem zweiten Sensor gewonnen wird.

15. Fahrzeug mit dem Set nach Anspruch 13 oder Anspruch 14, wobei die Fahrzeugkamera derart an dem Fahrzeug montiert ist, dass die Fahrzeugkamera auf eine Szene außerhalb des Fahrzeuges zeigt, die Fahrzeugkamera an die Bildverarbeitungsvorrichtung angeschlossen ist, und wobei die Bildverarbeitungsvorrichtung als ein elektronisches Bauelement des Fahrzeuges oder der Fahrzeugkamera bereitstellt ist.

## Revendications

1. Procédé de détection de gouttelettes sur un objectif de caméra d'un véhicule, comprenant
- la réception de données d'image provenant d'une caméra de véhicule, les données d'image comprenant des images individuelles,
- la génération d'une image de gouttelette synthétique en réduisant une première image individuelle des données d'image à une taille prédéfinie d'une gouttelette, obtenant ainsi une image de taille réduite et en tournant l'image de taille réduite selon un angle de rotation prédéfini,
- la comparaison de l'image de gouttelette synthétique avec une partie de détection d'une seconde image individuelle, la partie de détection étant une partie d'une image individuelle à un emplacement prédéfini, et la détermination d'une similarité entre l'image de gouttelette synthétique et la partie de détection, la partie de détection présentant la même forme et la même taille que l'image de gouttelette synthétique, et la comparaison étant répétée pour différents emplacements de la partie de détection,
- la détection d'une gouttelette si la similarité dépasse un seuil prédéfini, la similarité étant mesurée avec la méthode des moindres carrés, qui compare la luminosité des pixels de l'image de gouttelette synthétique avec la partie de détection sous-jacente, la moyenne des pixels de l'image de gouttelette synthétique étant calculée pour obtenir des pixels effectifs ayant une taille supérieure aux pixels originaux, et les pixels effectifs de l'image de gouttelette synthétique étant comparés avec des pixels effectifs de la partie d'image sous-jacente.

2. Procédé selon la revendication 1, comprenant
- l'exécution de la comparaison de la gouttelette synthétique avec la partie de détection parallèlement pour de multiples parties de détection.

3. Procédé selon la revendication 1 ou la revendication 2, comprenant
- l'enregistrement de la seconde image individuelle dans un premier emplacement de mémoire et un second emplacement de mémoire,
- la génération d'une seconde image de gouttelette synthétique en réduisant la première image individuelle des données d'image à une seconde taille prédéfinie d'une gouttelette, obtenant ainsi une image de taille réduite et en tournant l'image de taille réduite selon un angle de rotation prédéfini,
- la détermination d'une similarité entre la seconde image de gouttelette synthétique et une partie de détection de la seconde image individuelle du second emplacement de mémoire à des emplacements prédéfinis de la partie de détection, la partie de détection présentant la même forme et la même taille que la seconde image de gouttelette synthétique,
- la détection d'une gouttelette si la similarité dépasse un seuil prédéfini.

4. Procédé selon l'une quelconque des revendications précédentes, comprenant
- la division de la première image individuelle en zones de luminosité différente,
la comparaison d'une image de gouttelette synthétique avec une partie de détection comprenant la division de la partie de détection en zones correspondantes et la comparaison des zones de l'image de gouttelette synthétique, correspondant aux zones de la première image individuelle, avec les zones de la partie de détection.

5. Procédé selon l'une quelconque des revendications précédentes, comprenant
- l'ajustement de la forme de la gouttelette synthétique selon une fonction de distorsion de l'objectif prédéfinie et selon un emplacement de la partie de détection dans la seconde image individuelle.

6. Procédé selon l'une quelconque des revendications précédentes, comprenant
- l'obtention de la première image individuelle par un premier capteur et l'obtention de la seconde image individuelle par un second capteur, la distance entre un objectif de caméra et le premier capteur étant différente de la distance entre l'objectif de la caméra et le second capteur.

7. Procédé selon l'une quelconque des revendications précédentes,
dans lequel les tailles des images de gouttelette synthétique sont choisies selon une progression géométrique prédéfinie ou selon une distribution statistique prédéfinie de gouttelettes.

8. Procédé selon l'une quelconque des revendications précédentes, dans lequel des emplacements précédemment définis de gouttelettes sont utilisés comme emplacements de départ pour comparer les gouttelettes synthétiques avec des parties sous-jacentes de l'image individuelle.

9. Programme informatique destiné à exécuter les étapes d'un procédé selon une des revendications 1 à 7.

10. Support de stockage lisible par ordinateur comprenant le programme informatique selon la revendication 9.

11. Dispositif de traitement d'image pour une caméra de véhicule, le dispositif de traitement d'image comprenant
- une connexion d'entrée destinée à recevoir des données d'image provenant de la caméra de véhicule, les données d'image comprenant des images individuelles,
- une unité de calcul, l'unité de calcul étant connectée à la connexion d'entrée, et l'unité de calcul étant fonctionnelle
pour générer une image de gouttelette synthétique en réduisant une première image individuelle des données d'image à une taille prédéfinie d'une gouttelette, obtenant ainsi une image de taille réduite et en tournant l'image de taille réduite selon un angle de rotation prédéfini,
pour comparer l'image de gouttelette synthétique avec une partie de détection d'une seconde image individuelle, la partie de détection étant une partie d'une image individuelle à un emplacement prédéfini, et pour déterminer une similarité entre l'image de gouttelette synthétique et la partie de détection, la partie de détection présentant la même forme et la même taille que l'image de gouttelette synthétique, et la comparaison étant répétée pour différents emplacements de la partie de détection, et
pour détecter une gouttelette si la similarité dépasse un seuil prédéfini, la similarité étant mesurée avec la méthode des moindres carrés, qui compare la luminosité des pixels de l'image de gouttelette synthétique avec la partie de détection sous-jacente, la moyenne des pixels de l'image de gouttelette synthétique étant calculée pour obtenir des pixels effectifs ayant une taille supérieure au pixel original, et les pixels effectifs de l'image de gouttelette synthétique étant comparés avec des pixels effectifs de la partie d'image sous-jacente.

12. Dispositif de traitement d'image selon la revendication 11, dans lequel l'unité de calcul comprend un processeur graphique à noyaux multiples, et dans lequel l'unité de calcul fournit des moyens de planification destinés à attribuer des comparaisons d'une image de gouttelette synthétique avec de multiples parties d'image d'une image individuelle à différents noyaux de processeur du processeur graphique à noyaux multiples.

13. Kit, le kit comprenant le dispositif de traitement d'image selon la revendication 11 ou la revendication 12, et une caméra de véhicule, la caméra de véhicule pouvant être connectée au dispositif de traitement d'image.

14. Kit selon la revendication 13, dans lequel la caméra de véhicule est adaptée pour mettre au point l'image de caméra sur un premier capteur et sur un second capteur, et dans lequel la première image individuelle est obtenue par le premier capteur et la seconde image individuelle est obtenue par le second capteur.

15. Véhicule comprenant le kit selon la revendication 13 ou la revendication 14, dans lequel la caméra de véhicule est montée sur le véhicule de telle sorte que la caméra de véhicule vise une scène en dehors du véhicule, la caméra de véhicule est connectée au dispositif de traitement d'image, et dans lequel le dispositif de traitement d'image est prévu sous la forme d'un composant électronique du véhicule ou de la caméra de véhicule.
